# EUROPEAN PATENT APPLICATION

(11) **EP 1 906 131 A2**
(43) Date of publication of application: **02.04.2008**
(21) Application number: 07017994.0
(22) Date of filing: 13.09.2007
(51) Int. Cl.: F28F 13/12, F28F 19/06, F28D 1/053

(54) **Corrosion resistant, alloy-coated charge air cooler**

(30) Priority: 29.09.2006 US 537063
(71) Applicant: International Truck Intellectual Property Company, LLC., Warrenville, IL 60555 (US)
(72) Inventor: Tolani, Nirmal M., Fort Wayne IN 46835 (US)
(74) Representative: Kuhnen & Wacker

(57) **Abstract**

A heat exchanger assembly for an automotive vehicle including at least one tube (16) having a housing (28) and at least one turbulator (26) disposed inside the tube (16). The turbulator (26) has an exposed surface. A corrosion resistant, thermally conductive, nonelectrolytic metallic alloy (30) is deposited on the inner surface (34) of the housing (28) of the tube (16), and is also deposited on the exposed surface (50) of the turbulator (26).

## Description

### BACKGROUND OF THE INVENTION

The present invention relates generally to heat exchangers in ground vehicles. More specifically, the present invention relates to a lightweight Charge Air Cooler (CAC) with improved corrosion resistance needed for new/future exhaust emission compliant engines.

Automotive vehicles with internal combustion engines commonly have heat exchangers such as radiators, charge air coolers, condensers, heater cores, and evaporators to provide heat transfer for the vehicle. Generally, these types of heat exchangers employ the same thermodynamic principles to transfer heat from a fluid (liquid or gas) to another fluid, where the two fluids are physically separated, usually by metal tubing. On a vehicle, the charge air cooler is a part of the engine air intake system that uses ambient air to cool the intake air, which improves engine combustion efficiency.

A charge air cooler typically has stacks of tubes, two headers, fins, and two end caps. The tubes serve as passages for air flow. Within each of the tubes are turbulators, which are heat transfer enhancement devices. The turbulators generally have an undulating shape to turbulate the flow of fluid through the tube so that heat can be transferred more effectively. The headers, the tubes, the turbulators and the fins are typically made of wrought aluminum alloys. The headers, turbulators and fins are generally made from aluminum clad with brazing alloy to form brazed joints between mating components. Conventionally, the turbulators are placed inside the tubes, and the tubes and fins are stacked together along with headers to form a core assembly. The core assembly is processed in the brazing furnace to form bonds between turbulators and the inside tube walls, fins and tube outer walls, and tubes and headers. After the core is formed, end caps are welded to the core to form the charge air cooler assembly.

The benefits of a CAC include obtaining cooler intake air, increased horsepower, lower emissions, and increased fuel mileage. The new federal regulations to reduce the vehicle emissions require very significant modification to the air intake system of the engines such as use of Exhaust Gas Recirculation (EGR). These modifications to the intake air system in many cases give rise to a highly corrosive condensate inside the charge air cooler. As a result of highly corrosive condensate, the traditional aluminum CAC is susceptible to internal, premature failure.

For increased corrosion resistance, CACs made entirely from stainless subcomponents are being considered for some commercial vehicles. The CACs made from stainless steel are much heavier and more expensive. Additionally, heavier CAC requires heavier and more expensive structures to support the CAC in the vehicle. This further increases the weight and the cost of the vehicle, and reduces the amount of weight that can be transported on the automotive vehicle. A significant increase in weight as well as increase in the cost makes the stainless steel CAC less desirable.

Thus, there is a need for a charge air cooler that is highly corrosion resistant and does not significantly increase the weight and cost.

### BRIEF SUMMARY OF THE INVENTION

The above-listed needs are met or exceeded by the present heat exchanger assembly for an automotive vehicle. The heat exchanger includes at least one tube having a housing and at least one turbulator disposed inside the tube. The turbulator has an exposed surface. A corrosion resistant, thermally conductive, nonelectrolytic metallic alloy is deposited on the inner surface of the housing of the tube, and is also deposited on the exposed surface of the turbulator.

A method of making a heat exchanger includes providing a tube having an inside surface and a turbulator having an exposed surface, fixing the turbulator to the interior of the tube, and depositing a corrosion resistant, thermally conductive, nonelectrolytic metallic alloy on the inside surface of the tube and upon the exposed surface of the turbulator.

Also provided is a tube for a heat exchanger having a generally cylindrical housing including an aluminum based material. The housing has an internal deposited layer including a corrosion resistant, thermally conductive, nonelectrolytic metallic alloy. At least one turbulator is disposed inside the housing. The turbulator includes an aluminum based material, wherein a corrosion resistant, thermally conductive, nonelectrolytic metallic alloy is deposited on the turbulator.

### BRIEF DESCRIPTION OF THE SEVERAL VIEWS OF THE DRAWINGS

FIG. 1 is an exploded perspective view of a charge air cooler assembly according to the present invention;

FIG. 2 is a partial perspective view of a fin and a tube located in a core of the charge air cooler assembly;

FIG. 3 is a cross-sectional view of a conventional tube assembly; and

FIG. 4 is a cross-sectional view of an embodiment of a tube assembly of the present invention.

### DETAILED DESCRIPTION OF THE INVENTION

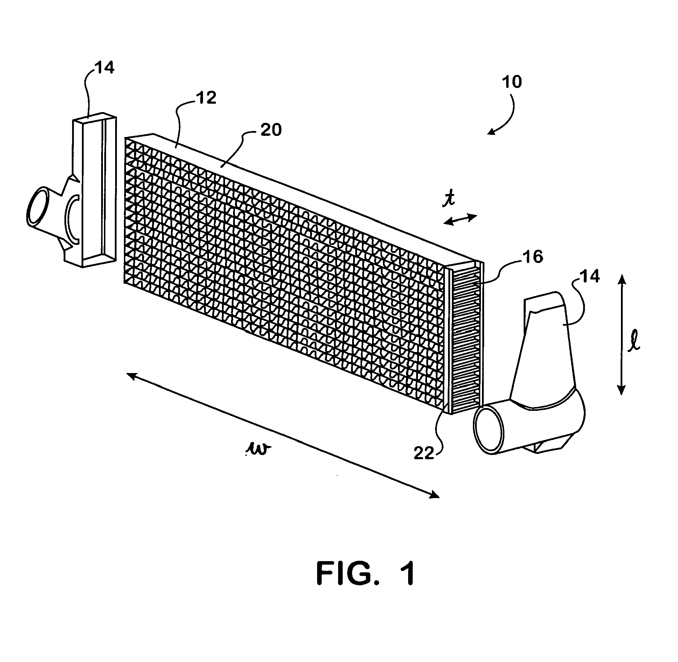

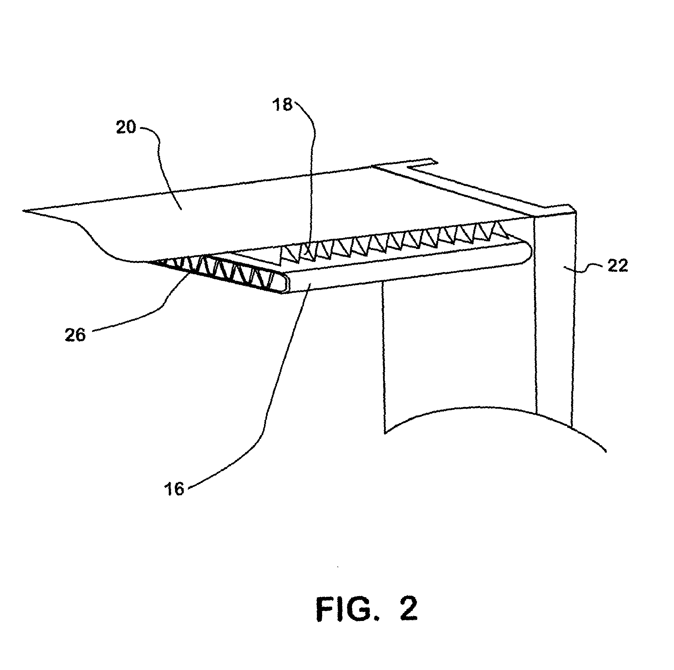

Referring now to FIGs. 1 and 2, an embodiment of a heat exchanger assembly is shown. In this example, the heat exchanger is a charge air cooler (CAC) assembly for an automotive vehicle, which is indicated generally at 10. While the present heat exchanger 10 is a charge air cooler, it is contemplated that the present invention can be used with other heat exchanger assemblies.

The charge air cooler assembly 10 includes a core assembly 12 and two end caps 14. The core assembly 12 includes a plurality of tubes 16 and fins 18. Each tube 16 preferably extends across the width "w" of the core assembly 12. Additionally, each fin 18 preferably extends along the width of the core assembly 12. Preferably bounding the periphery of the core assembly 12 are side members 20 running across the width "w" and thickness "t" directions of the core assembly, and header members 22 running in the longitudinal "1" direction of the core assembly. The two end caps 14 are preferably welded onto the header members 22.

As seen in FIG. 2, within each of the tubes 16 is a turbulator 26. The turbulator 26 is preferably a metal sheet having a series of waves or undulations that is configured to break up or turbulate the flow of fluid through the tube 16 to more effectively transfer heat. In the present invention, the turbulator 26 is made of an aluminum based material.

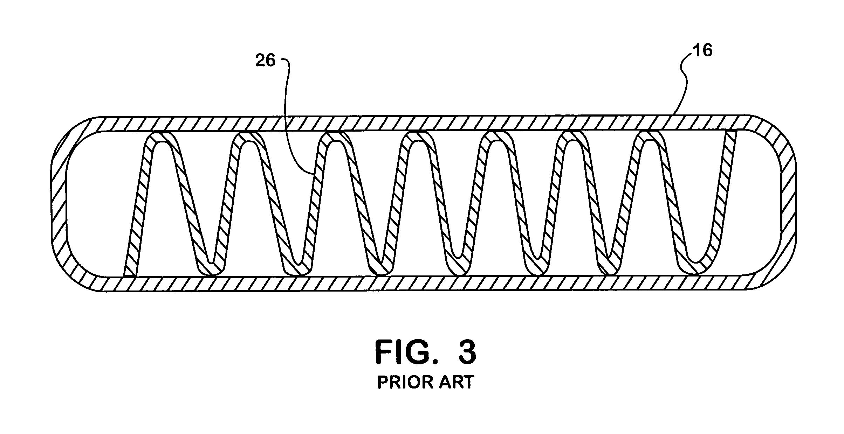

Referring now to FIG. 3, the prior art tube 16P is made from extruded aluminum and the prior art turbulator 26P is made from sheet aluminum clad with a brazing alloy. Additionally, the end caps (not shown) are formed of cast aluminum, the fins and the header (not shown) are formed of sheet aluminum clad with brazing alloy, and the sides (not shown) are formed of sheet aluminum, as is known in the art. The prior art core assembly (not shown) is generally vacuum brazed, and the cast aluminum end caps (not shown) are welded to the core headers.

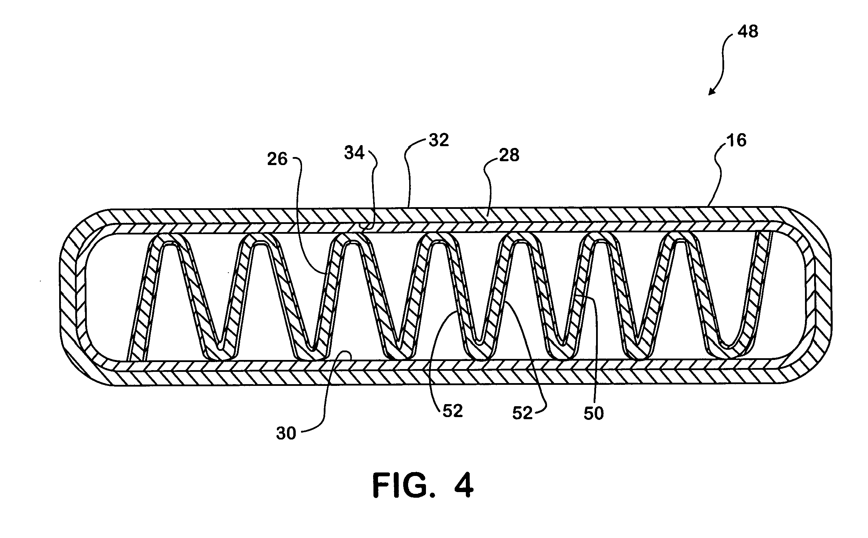

Referring now to FIG. 4, an embodiment of a tube assembly 48 has a corrosion resistant, thermally conductive, nonelectrolytic metallic alloy layer 30 deposited on an inner surface 34 of a tube housing 28, and also on an exposed surface 50 of the turbulators 26. The alloy is preferably deposited by a nonelectrolytic coating process, as is known in the art and disclosed in the article "Electroless Alloy Deposition" by Phillip D. Stapleton, ASM Handbook, Volume 5, Surface Engineering, 1994, which is herein incorporated by reference.

The tube 16 has two layers, the tube housing 28 and an internal deposited layer 30. The tube housing layer 28 of the tube 16 is preferably formed of a conventional aluminum based material, and the internal deposited layer 30 is preferably formed of a corrosion resistant, thermally conductive, nonelectrolytic metallic alloy. The tube housing layer 28 has an outer surface 32, which defines the outer surface of the tube. An inner surface 34 of the tube housing layer 28 forms the surface upon which the internal layer 30 of corrosion resistant, thermally conductive, nonelectrolytic metallic alloy is deposited.

The turbulators 26 disposed within the tube 16 are preferably conventional aluminum turbulators. The turbulators 26 have the exposed surface 50, which is exposed to the fluid flow through the tube 16. The exposed surface 50 of the turbulators 26 also receive a layer 52 of the corrosion resistant, thermally conductive, nonelectrolytic metallic alloy.

The deposition of nonelectrolytic metallic alloys on metals has beneficial properties such as uniformity, excellent corrosion resistance, and excellent wear and abrasion resistance, although the invention should not be limited to these properties. A nonelectrolytic coating is produced by the controlled chemical reduction of metallic ions onto a catalytic surface. The reaction uses a reducing agent to supply electrons for the reduction (to cause the metal salts to be reduced onto an oxide-free catalytic surface). The reaction continues as long as the surface remains in contact with the bath solution or the solution becomes depleted of metallic ions.

Preferably, the corrosion resistant, thermally conductive, nonelectrolytic metallic alloy layer 30, 52 is a nickel phosphorus (Ni-P) alloy. Other preferable alloys include nickel phosphorus molybdenum (Ni-P-Mo) alloy, nickel tin phosphorus (Ni-Sn-P) alloy, cobalt phosphorus (Co-P) alloy, cobalt phosphorus manganese (Co-P-Mn) alloy, nickel copper phosphorus (Ni-Cu-P) alloy.

Depositing the alloy onto the tube housing layer 28 and onto the exposed surface 50 of the turbulator 26 can occur individually or simultaneously before the turbulator is brazed to the tube, or alternatively, the deposition can occur after the turbulator is brazed to the tube. Once a tube assembly 48 is formed, a conventional process for assembling a charge air cooler 10 can be used.

The advantage of depositing the nonelectrolytic metallic alloy onto the tube housing 28, (forming the internal layer 30) and also depositing onto the exposed surfaces 50 of the turbulator 26 (forming the outside layer 52), is that the interior corrosion resistance is addressed by the deposited alloy, with very little increase in weight as compared to an entirely stainless steel construction of tube and turbulator. Also, since aluminum is used as the base material, the construction is less costly than using a stainless steel construction. Further, since the tube housing layer 28 is formed of aluminum, the fins 18 can also be formed of aluminum, which further reduces weight and cost. Another advantage is that aluminum has higher thermal conductivity, which is a beneficial material property in a charge air cooler 10.

Since the header members 22 and the end caps 14 are relatively thick members compared to the tubes 16 and turbulators 26, a certain amount of corrosion of the these components can be tolerated without affecting the integrity or performance of the charge air cooler 10. For this reason, conventional materials (aluminum alloys, wrought aluminum) and processes can be used to produce the charge air cooler with the present tube assembly.

However, to further enhance the corrosion resistance of the charge air cooler 10, the inner surfaces of the header members 22 and the end caps 14 can also be coated with corrosion resistant, thermally conductive, nonelectrolytic metallic alloy.

While particular embodiments of the present heat exchanger have been shown and described, it will be appreciated by those skilled in the art that changes and modifications may be made thereto without departing from the invention in its broader aspects and as set forth in the following claims.

## Claims

1. A heat exchanger assembly for an automotive vehicle comprising:
at least one tube including a tube housing having an inside surface;
wherein a corrosion resistant, thermally conductive, metallic alloy is deposited on said inside surface of said tube housing.

2. The heat exchanger of claim 1, further comprising:
at least one turbulator disposed inside said tube, said turbulator having an exposed surface;
wherein a corrosion resistant, thermally conductive, metallic alloy is deposited on said exposed surface of said turbulator.

3. The heat exchanger of claim 2 wherein said corrosion resistant, thermally conductive, metallic alloy is one ofNi-P, Ni-P-Mo, Ni-Sn-P, Co-P, Co-P-Mo, Ni-Cu-P.

4. The heat exchanger of claim 2 wherein said tube housing of said at least one tube comprises an aluminum based material.

5. The heat exchanger of claim 2 wherein said turbulator comprises an aluminum based material.

6. The heat exchanger of claim 1 wherein said corrosion resistant, thermally conductive, metallic alloy is a corrosion resistant, thermally conductive, nonelectrolytic metallic alloy.

7. The heat exchanger of claim 2 wherein said corrosion resistant, thermally conductive, metallic alloy is a corrosion resistant, thermally conductive, nonelectrolytic metallic alloy.

8. The heat exchanger of claim 7 wherein said corrosion resistant, thermally conductive, nonelectrolytic metallic alloy is one ofNi-P, Ni-P-Mo, Ni-Sn-P, Co-P, Co-P-Mo, Ni-Cu-P.

9. The heat exchanger of claim 7 wherein said tube housing of said at least one tube comprises an aluminum based material.

10. The heat exchanger of claim 7 wherein said turbulator comprises an aluminum based material.

11. A method of making a heat exchanger, comprising:
providing a tube having an inside surface;
depositing a corrosion resistant, thermally conductive, nonelectrolytic metallic alloy on said inside surface of said tube;
providing a turbulator having an exposed surface;
depositing said corrosion resistant, thermally conductive, nickel metallic alloy on said exposed surface of said turbulator; and
fixing said turbulator to said tube.

12. The method of claim 11 wherein said corrosion resistant, thermally conductive, nonelectrolytic metallic alloy is one of Ni-P, Ni-P-Mo, Ni-Sn-P, Co-P, Co-P-Mo, Ni-Cu-P.

13. The method of claim 11 wherein said turbulator is fixed to said tube using a brazing process.

14. The method of claim 11 wherein said corrosion resistant, thermally conductive, nonelectrolytic metallic alloy is deposited on said tube and said turbulator before said turbulator is fixed to said tube.

15. The method of claim 11 wherein said corrosion resistant, thermally conductive, nonelectrolytic metallic alloy is deposited on said tube and said turbulator after said turbulator is fixed to said tube.

16. A tube for a heat exchanger, comprising:
a generally cylindrical housing comprising an aluminum based material, said housing having an internal deposited layer comprising a corrosion resistant, thermally conductive, nonelectrolytic metallic alloy;
at least one turbulator disposed inside said housing, said turbulator comprising a aluminum based material, wherein a corrosion resistant, thermally conductive, nonelectrolytic metallic alloy is deposited on said at least one turbulator.
